# EUROPEAN PATENT SPECIFICATION

(11) **EP 2 256 977 B1**
(45) Date of publication and mention of the grant of the patent: **19.12.2012**
(21) Application number: 10176070.0
(22) Date of filing: 14.04.2006
(51) Int. Cl.: H04L 1/00, H04L 27/26, H04L 1/20

(54) **Method for obtaining information representative of the channel quality indication on at least one frequency subband**
Verfahren zum Erhalt von für das Feedback zur Kanalqualität auf mindestens einem Frequenzunterband repräsentativer Information
Procédé pour obtenir des informations représentatives d'une indication de qualité de canal sur au moins une sous-bande de fréquences

(43) Date of publication of application: 01.12.2010
(62) Divisional of application: 09152798.6
(73) Proprietor: Mitsubishi Electric R&D Centre Europe B.V., 1119 NS Schiphol Rijk (NL); MITSUBISHI DENKI KABUSHIKI KAISHA, Chiyoda-ku, Tokyo 100-8310 (JP)
(72) Inventor: Castelain, Damien, 35802, RENNES Cedex 7 (FR); Hara, Yoshitaka, 35708, RENNES Cedex 7 (FR); Fukui, Noriyuki, 35708, RENNES Cedex 7 (FR)
(74) Representative: Maillet, Alain

(56) References cited:
- EP-A- 1 679 924
- WO-A-2005/072073
- WO-A-2005/074312
- US-A1- 2005 281 226
- US-A1- 2006 034 244
- 3GPP TSG RAN WG1 31: "Tdoc R1-03-0286 Text proposal on CQI Enhancements for TR on HSDPA Enhancements" TSG-RAN WG1 #31, 18 February 2003 (2003-02-18), pages 1-7, XP002312853
- SEOKHYUN YOON ET AL: "Orthogonal frequency division multiple access with an aggregated sub-channel structure and statistical channel quality measurement" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 1023-1027, XP010786777 ISBN: 0-7803-8521-7
- DAMJI N ET AL: "Adaptive downlink multi-carrier resource allocation for real-time multimedia traffic in cellular systems" COMMUNICATIONS, 2004 IEEE INTERNATIONAL CONFERENCE ON PARIS, FRANCE 20-24 JUNE 2004, PISCATAWAY, NJ, USA,IEEE, 20 June 2004 (2004-06-20), pages 4258-4262, XP010711937 ISBN: 0-7803-8533-0

## Description

The present invention relates generally to telecommunication systems and in particular, to methods and devices for reporting information representative of the channel quality indication of a first group of at least one frequency subband and information representative of the channel quality indications of a second group of at least one frequency subband.

Recently, efficient transmission schemes in space and frequency domains have been investigated to meet the growing demand for high data rate wireless communications. In recent years, Orthogonal Frequency Division Multiplexing Access scheme (OFDMA) have been discussed for mobile communication systems.

Classically, the Signal to Interference plus Noise Ratio measured by the terminals is used as a channel quality indication. In case of frequency scheduling or in order to perform frequency subband based transmission control, each terminal reports to the base station a channel quality indication for each of the subbands of the OFDMA system. Such channel quality indications reporting is performed by transferring a large amount of information bits from each terminal to the base station. Such reporting requires an important part of the available bandwidth of the OFDMA system.

Furthermore, when the wireless telecommunication network comprises a plurality of base stations which are located close to each other in order to cover a large and continuous area, the frequency subbands, used by a base station for the communication with mobile terminals comprised in the wireless area the base station manages, increase the noise level and interferences measured by other mobile terminals which are located in neighbour wireless areas.

For that, some radio planning techniques has been developed. The frequency subbands allocated to a base station are different from the frequency subbands allocated to its neighbour base stations.

The complexity of radio planning techniques and the necessity to reallocate frequency subbands each time a new base station is installed in the wireless telecommunication network, make such solution not satisfactory.

The patent applications WO 2005/074312 and WO 2005/072073 disclose a method for obtaining, by a base station and from a subscriber station, information representative of the channel quality indication in an OFDMA system.

The patent application EP1679924 discloses an apparatus and method for transmitting/receiving channel quality information in a communication system having a frame including subchannels corresponding to the same frequency reuse factor or different frequency reuse factors.

The aim of the invention is therefore to propose methods and devices which allow the reporting to a first telecommunication device, of information representative of the channel quality indications determined by a second telecommunication device without decreasing in an important manner the bandwidth of the uplink channel which is used for classical data transmission.

Furthermore, the present invention aims to determine the frequency subbands which have good channel quality indications in order to use them for the communication between the telecommunication devices and to avoid the use of radio planning techniques as used in existing wireless telecommunication networks.

To that end, the present invention concerns a method for transferring to a first telecommunication device information representative of the channel quality indication determined by a second telecommunication device on frequency subbands, the telecommunication devices being linked through a wireless telecommunication network, the wireless telecommunication network using a plurality of frequency subbands, **characterised in that** the method comprises the steps executed by the second telecommunication device of:
- determining plural first channel quality indications on plural subbands comprised in a first frequency range,
- determining, in a second frequency range, a second channel quality indication on at least two subbands, the second frequency range being equal to the first frequency range,
- transferring within a time period the plural first channel quality indications and the second channel quality indication to the first telecommunication device.

The present invention concerns also a device for transferring to a first telecommunication device information representative of the channel quality indication determined by a second telecommunication device on frequency subbands, the telecommunication devices being linked through a wireless telecommunication network, the wireless telecommunication network using a plurality of frequency subbands, **characterised in that** the device for transferring information is included in the second telecommunication device and comprises:
- a first unit configured to determine plural first channel quality indications on plural subbands comprised in a first frequency range,
- a second unit configured to determine in a second frequency range, a second channel quality indication on at least two subbands, the second frequency range being equal to the first frequency range,
- a third unit configured to transfer within a time period the plural first channel quality indications and the second channel quality indication to the first telecommunication device.

Thus, the first telecommunication device is aware about information representative of channel quality indications without decreasing in an important manner the bandwidth which is used for classical data transmission.

The present invention concerns also a method for transferring to a first telecommunication device information representative of the channel quality indication determined by a second telecommunication device on frequency subbands, the telecommunication devices being linked through a wireless telecommunication network, the wireless telecommunication network using a plurality of frequency subbands, **characterized in that** the method comprises the steps of:
- determining, by the second telecommunication device, plural first channel quality indications on plural subbands comprised in a first frequency range,
- determining, by the second telecommunication device, in a second frequency range, a second channel quality indication on at least two subbands, the second frequency range being equal to the first frequency range,
- transferring, by the second telecommunication device, within a time period the plural first channel quality indications and the second channel quality indication to the first telecommunication device.
- receiving, by the first telecommunication device, within the time period, the plural first channel quality indications and the second channel quality indication.

The present invention concerns also a system for transferring to a first telecommunication device information representative of the channel quality indication determined by a second telecommunication device on frequency subbands, the telecommunication devices being linked through a wireless telecommunication network, the wireless telecommunication network using a plurality of frequency subbands the system comprising the first and second telecommunication devices, **characterized in that** the system for transferring information comprises:
- a first unit, included in the second telecommunication device, configured to determine, plural first channel quality indications on plural subbands comprised in a first frequency range,
- a second unit, included in the second telecommunication device, configured to determine in a second frequency range, a second channel quality indication on at least two subbands, the second frequency range being equal to the first frequency range,
- a third unit, included in the second telecommunication device, configured to transfer within a time period the plural first channel quality indications and the second channel quality indication to the first telecommunication device.
- a fourth unit, included in the first telecommunication device, configured to receive within the time period the plural first channel quality indications and the second channel quality indication.

Thus, the first telecommunication device is aware about information representative of channel quality indications without decreasing in an important manner the bandwidth which is used for classical data transmission.

According to a particular feature, the first telecommunication device determines the frequency subbands that the second telecommunication device has to use when it receives signals representative of a group of data from the first telecommunication device and/or the frequency subbands that the second telecommunication device has to use when it transfers signals representative of a group of data to the first telecommunication device.

The characteristics of the invention will emerge more clearly from a reading of the following description of an example embodiment, the said description being produced with reference to the accompanying drawings, among which :
Fig. 1 is a diagram representing the architecture of a wireless telecommunication network in which the present invention is implemented ;
Fig. 2 is a diagram representing the architecture of a first telecommunication device ;
Fig. 3 is a diagram representing the architecture of a second telecommunication device ;
Fig. 4 is a diagram representing an algorithm executed by the first telecommunication device according to a first mode of realisation of the present invention ;
Fig. 5a is a diagram representing an example of a message transferred by a second telecommunication device to a first telecommunication device according to the present invention;
Fig. 5b is a diagram representing an example of a message transferred by a first telecommunication device to a second telecommunication device comprising information identifying the first and the second groups of at least one frequency subband;
Fig. 6a is a diagram representing a first example of the interference plus noise levels in the frequency subbands of the wireless telecommunication network ;
Fig. 6b is a diagram representing a second example of the interference plus noise levels in the frequency subbands of the wireless telecommunication network ;
Fig. 7a is a diagram representing another example of a message transferred by a first telecommunication device to a second telecommunication device comprising information identifying the first and the second groups of at least one frequency subband;
Fig. 7b is a diagram representing an example of frames transferred by the second telecommunication devices to a first telecommunication device ;
Fig. 8 is a diagram representing an algorithm executed by the first telecommunication device according to a second mode of realisation of the present invention ;
Fig. 9 is a diagram representing an example of different groups of frequency subbands used in the second mode of realisation of the present invention ;
Fig. 10 is a diagram representing an algorithm executed by each second telecommunication device according to the first and second modes of realisation of the present invention;
Fig. 11 is a diagram representing an algorithm executed by the first telecommunication device according to a third mode of realisation of the present invention ;
Fig. 12 is a diagram representing an algorithm executed by each second telecommunication device according to the third mode of realisation of the present invention ;
Fig. 13 is a diagram representing an algorithm executed by each first telecommunication device in order to determine at least a first group for each second telecommunication device considering the information transferred by other second telecommunication devices according to a fourth mode of realisation of the present invention.

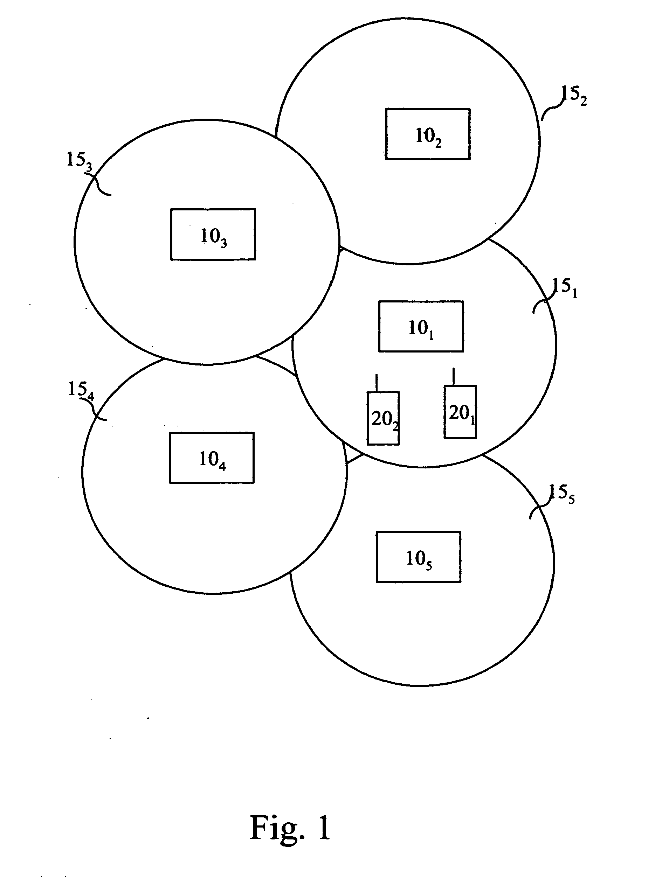

**Fig. 1** is a diagram representing the architecture of a wireless telecommunication network in which the present invention is implemented.

In the wireless telecommunication network of the Fig. 1, plural first telecommunication devices 10₁ to 10₅ manage respectively a wireless area 15₁ to 15₅. Some second telecommunication devices 20 are located in the wireless areas 15.

In the Fig. 1, only two second telecommunication devices 20₁ and 20₂ are shown for the sake of clarity.

A first telecommunication device 10 manages a wireless area 15 when it enables the second telecommunication devices 20 which are located in that wireless area 15 to establish some communication with a remote telecommunication device, not shown in the Fig. 1, through the resources of the first telecommunication device 10.

The first telecommunication devices 10 are, as example and in a non limitative way, base stations or nodes or enhanced node B.

The second telecommunication devices 20 are, as example and in a non limitative way, wireless terminals like mobile phones, personal digital assistants, personal computers.

Each first telecommunication device 20₁ or 20₂ located in the wireless area 15₁ is linked to the second telecommunication device 10₁ using an uplink and a downlink channel.

Orthogonal Frequency Division Multiplexing Access scheme is used in the wireless telecommunication network. In an OFDMA scheme, the overall system bandwidth is partitioned into *L* plural orthogonal frequency subbands, which are also referred to as frequency bins or subchannels. With OFDMA, each frequency subband is associated with respective subcarriers upon which data may be modulated.

The *L* frequency subbands are divided into a plurality of groups. Each group comprises at least one frequency subband.

Preferably, and in a non limitative way, the groups of frequency subbands are predefined for the wireless telecommunication network. Each first and second telecommunication devices knows which frequency subband or frequency subbands comprised in each group. Each group has an identifier, known by each telecommunication device 10 or 20, which identifies it uniquely.

The wireless telecommunication network uses either a Time Division Duplexing scheme (TDD) or a Frequency Division Duplexing scheme.

When the wireless telecommunication network uses TDD scheme, the signals transferred in uplink and downlink channels are duplexed in different time periods of the same frequency band. The signals transferred within the wireless areas 15 share the same frequency spectrum.

When the system uses Frequency Division Duplexing scheme, the signals transferred in uplink and downlink channels are duplexed in different frequency bands. The spectrum is divided into different frequency bands and the uplink and downlink signals are transmitted simultaneously.

The first telecommunication device 10 transfers messages according to the present invention and signals representatives of a group of data to the second telecommunication devices 20 through the downlink channel and the second telecommunication devices 20 transfer messages according to the present invention and signals representatives of a group of data to the first telecommunication device 10 through the uplink channel.

A group of data is as example a frame constituted at least by a header field and a payload field which comprises classical data like data related to a phone call, or a video transfer and so on.

The signals transferred in a wireless area 15, as example, in the wireless area 15₅, are also received by the second telecommunication devices 20₁ and 20₂ which are comprised in a wireless area 15₁ which is neighbour of the wireless area 15₅. These signals increase the interference level and/or the noise level received by the second telecommunication devices 20₁ and 20₂.

According to the present invention, each second telecommunication device 20₁ to 20₂ reports to the first telecommunication 10₁ for each frequency subband of a first group of at least one frequency subband, a channel quality indication measured by the second telecommunication device 20 in that frequency subband. Each second telecommunication device 20₁ to 20₂ reports to the first telecommunication 10₁ for a second group of at least one frequency subband, an information representative of the channel quality indications measured by the second telecommunication device 20 on the at least one frequency subband of the second group of at least one frequency subband.

The information representative of a channel quality indication of a frequency subband is the SINR or the inverse of the Interference plus Noise components measured in that frequency subband by the second telecommunication device 20, or an information which indicates if the measured SINR or the inverse of the Interference plus Noise components is upper or lower than a predetermined value or is comprised within two predetermined values or is the modulation and coding scheme which are suited for the measured SINR or the measured Interference plus Noise components.

The information representative of the channel quality indications of at least a frequency subband of a second group is the average of the SINRs or the inverse of the Interference plus Noise components measured in each frequency subband of the second group by the second telecommunication device 20, or an information which indicates if the averaged SINRs or the inverse of Interference plus Noise components is upper or lower than a predetermined value or is comprised within two predetermined values or is the modulation and coding scheme which are suited for the measured SINRs or the inverse of the measured Interference plus Noise components.

The first telecommunication device 10₁ determines, using received the channel quality indication received for each frequency subband and the information representative of the channel quality indications on the at least one frequency subband of the second group of at least one frequency subband, another first group and/or another second group of at least a frequency subband for which at least one second telecommunication device 20 has to further transfer information representative of the channel quality indication for each frequency subband of the other first group of frequency subband and/or information representative of the channel quality indications measured by the second telecommunication device 20 on the at least one frequency subband of the other second group of at least one frequency subband.

Each first telecommunication device 10 determines, for each second telecommunication device 20 which is located in the wireless area 15 it manages, the group or groups of frequency subbands that each second telecommunication device 20 has to use when it receives signals representative of a group of data from the first telecommunication device 10 through the downlink channel and/or the group or groups of frequency subbands that each second telecommunication device 20 has to use when it transfers signals representative of a group of data to the first telecommunication device 10 through the uplink channel.

That group or groups of frequency subbands is or are the first group or the first groups of at least one frequency subband. A second group of at least one frequency subband is used only for the purpose of the reporting of information representative of the channel quality indications.

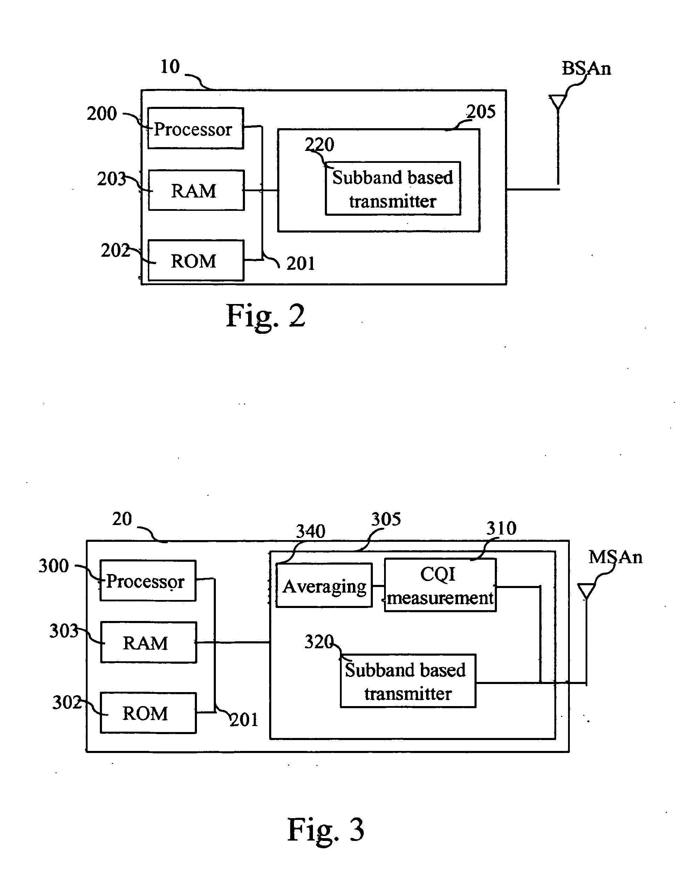

**Fig. 2** is a diagram representing the architecture of a first telecommunication device.

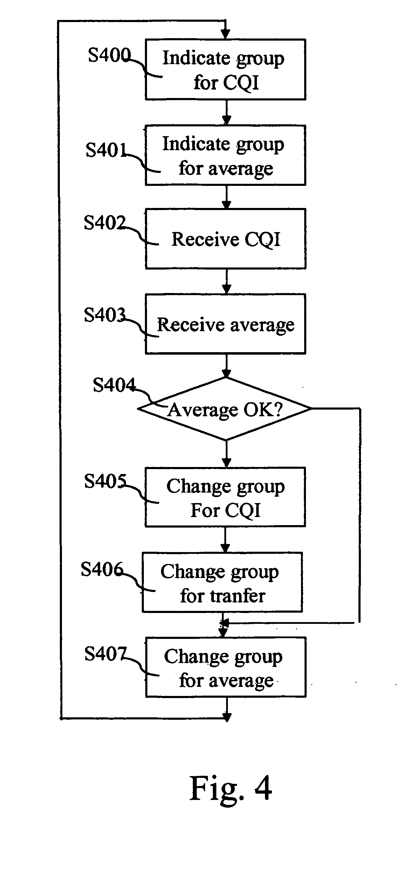

The first telecommunication device 10, has, for example, an architecture based on components connected together by a bus 201 and a processor 200 controlled by programs as disclosed in the Figs. 4 and 11 or 8 and 11.

It has to be noted here that the first telecommunication device 10 is, in a variant, implemented into one or several dedicated integrated circuits which execute the same operations as the one executed by the processor 200 as disclosed hereinafter.

The bus 201 links the processor 200 to a read only memory ROM 202, a random access memory RAM 203 and a channel interface 205.

The read only memory ROM 202 contains instructions of the programs related to the algorithm as disclosed in the Figs. 4, 11 and 13 or 8, 11 and 13 which are transferred, when the first telecommunication 10 is powered on to the random access memory RAM 203.

The RAM memory 203 contains registers intended to receive variables, and the instructions of the programs related to the algorithm as disclosed in the Figs. 4, 11 and 13 or 8, 11 and 13.

Through the channel interface 205, the processor 200 receives the channel quality indication for each frequency subband of the first group of at least a frequency subband transferred by the second telecommunication devices 20 and the information representative of the channel quality indications on the at least one frequency subband of the second group of at least one frequency subband

The processor 200 is able to select or determine another first group and/or another second group of at least a frequency subband for which at least one second telecommunication device 20 has to further transfer a channel quality indication for each frequency subband of the other first group of frequency subband and/or information representative of the channel quality indications on the at least one frequency subband of the other second group of at least one frequency subband.

The processor 200 is able to indicate randomly a first group to a second telecommunication device 20, to get the channel quality indication for each subband comprise in the first group. The processor 200 is able to change the first group in order to get, over a long period of time, a channel quality indication for at most each frequency subband used by the wireless telecommunication network. For that, the processor 200 may use the information representative of the channel quality indications of at least one frequency subband of the second groups.

Preferably, and in a non limitative way, the processor 200 determines from each channel quality indication of the first group received from a second telecommunication device 20, an information representative of these quality channel indications. That information is the average of the SINRs or the average of the inverse of the Interference plus Noise components received from the second telecommunication device 20, or an information which indicates if the averaged SINRs or the average of the inverse of Interference plus Noise components is upper or lower than a predetermined value or is comprised within two predetermined values or is the modulation and coding scheme which are suited for the measured SINRs or the inverse of the measured Interference plus Noise components.

The processor 200 is also able to determine, for each second telecommunication device 20 which is located in the wireless area 15 managed by the first telecommunication device 10, the group or groups of frequency subbands that each second telecommunication device 20 has to use when it receives signals representative of a group of data from the first telecommunication device 10 through the downlink channel and/or the group or groups of frequency subbands that each second telecommunication device 20 has to use when it transfers signals representative of a group of data to the first telecommunication device 10 through the uplink channel.

The channel interface 205 comprises a subband based transmitter 220 which enables the transfer of messages or of groups of data in the first groups of at least one subband frequency according to the invention. The subband based transmitter 220 forms signals which are transferred by the antenna BSAn.

**Fig. 3** is a diagram representing the architecture of a second telecommunication device.

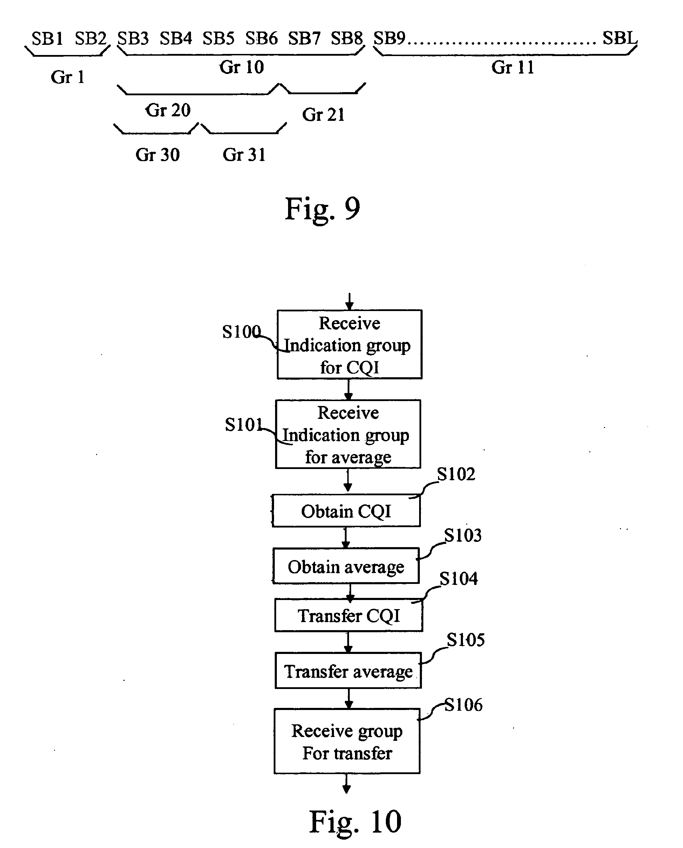

The second telecommunication device 20, as example the second telecommunication device 20₁, has, for example, an architecture based on components connected together by a bus 301 and a processor 300 controlled by programs related to the algorithm as disclosed in the Fig. 10.

It has to be noted here that the second telecommunication device 20 is, in a variant, implemented under the form of one or several dedicated integrated circuits which execute the same operations as the one executed by the processor 300 as disclosed hereinafter.

The bus 301 links the processor 300 to a read only memory ROM 302, a random access memory RAM 303 and a channel interface 305.

The read only memory ROM 302 contains instructions of the programs related to the algorithm as disclosed in the Fig. 10 which are transferred, when the first telecommunication device 20₁ is powered on to the random access memory RAM 303.

The RAM memory 303 contains registers intended to receive variables, and the instructions of the programs related to the algorithm as disclosed in the Fig. 10.

The channel interface 305 comprises a channel quality indication module CQI noted 310 in the Fig. 3 an averaging module 340 which determines information representative of the channel quality indications on the at least one frequency subband of the second group of at least one frequency subband.

The channel quality indication module 310 determines, for each of the *l*=1 to *L* frequency subbands of the wireless telecommunication network, the Signal to Interference plus Noise Ratio or the inverse of the Interference Plus Noise components received by the second telecommunication device 20 in that frequency subband.

The averaging module 340 determines the information representative of the channel quality indications of at least a frequency subband of a second group of at least one frequency subband. That information is the average of the SINRs or the average of the Interference plus Noise components measured in each frequency subband of the second group by the second telecommunication device, or an information which indicates if the averaged SINRs or the inverse of the averaged Interference plus Noise components is upper or lower than a predetermined value or is comprised within two predetermined values or is the modulation and coding scheme which are suited for the measured SINRs or the measured Interference plus Noise components.

The channel interface 305 comprises a subband based transmitter 320 which enables the transfer of messages in the first and/or the second groups of at least one subband frequency according to the invention and which enables the transfer of groups of data in at least one first group of at least one subband frequency subband. The subband based transmitter 320 forms signals which are transferred by the antenna MSAn.

**Fig. 4** is a diagram representing an algorithm executed by the first telecommunication device according to a first mode of realisation of the present invention.

At step S400, the processor 200 of, as example the first telecommunication device 10₁, commands the transfer through the channel interface 205 of an information identifying a first group of at least one frequency subband among plural groups, to a second telecommunication device 20.

The information identifying a first group of at least one frequency subband comprises the identifier, known by the first and second telecommunication devices 20 of a group of at least one frequency subband or comprises information identifying each frequency subband comprised in the first group of at least one frequency subband.

In a variant, the processor 200 commands the transfer, through the channel interface 205, of plural information identifying respectively a first group of at least one frequency subband.

At next step S401, the processor 200 commands the transfer through the channel interface 205 of an information identifying a second group of at least one frequency subband to the second telecommunication device 20.

The information identifying the second group of at least one frequency subband comprises the identifier, known by the first and second telecommunication devices 20, of a group of at least one frequency subband or comprises information identifying each frequency subband comprised in the second group of at least one frequency subband.

In a variant, the processor 200 commands the transfer through the channel interface 205 of plural information identifying respectively a second group of at least one frequency subband.

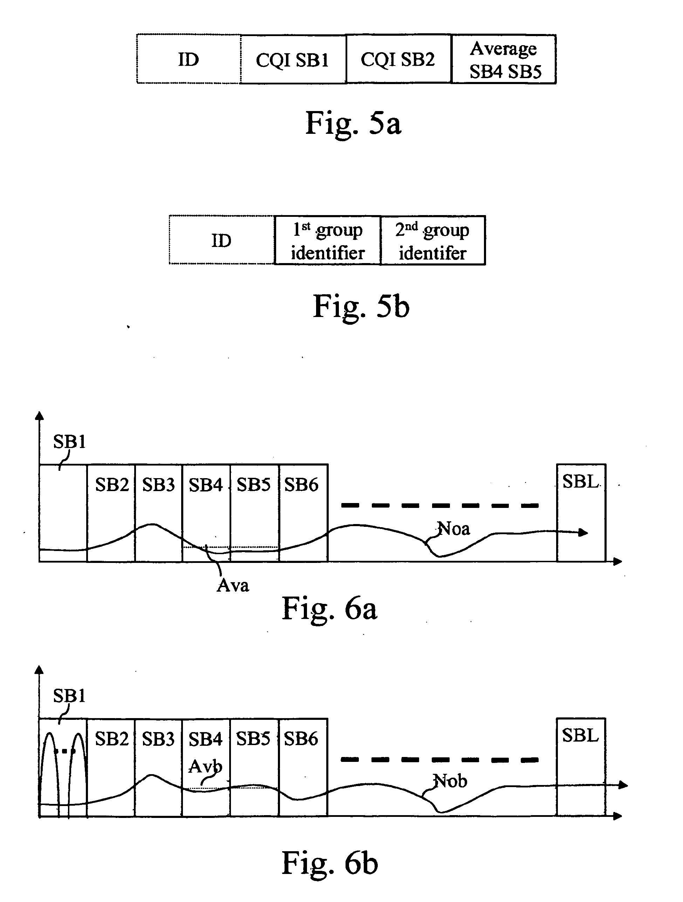

It has to be noted here that the at least one information identifying a first group and the at least one information identifying a second group are transferred in one message, as it is shown in the Fig. 5b, or in two messages.

**Fig. 5b** is a diagram representing an example of a message transferred by a first telecommunication device to a second telecommunication device comprising information identifying the first and the second groups of at least one frequency subband.

The message shown in the Fig. 5b comprises at least two fields. The first field noted 1^{st} group comprises at least an information identifying at least a first group of at least one frequency subband among the groups and the second field noted 2^{nd} group comprises at least an information identifying at least second group of at least one frequency subband among the groups. The third field noted ID, which is optional, identifies the second telecommunication device 20 to which the message is transferred.

At next step S402, the processor 200 detects the reception, through the channel interface 205, of at least one signal sent by the second telecommunication device 20 to which the information transferred at step S400 has been sent. That signal or signals comprises or comprise, for each frequency subband of the first group, information representative of a channel quality indication.

The signals are under the form of a message or under the form of pilot signals which are weighted by information representative of a channel quality indication.

In a variant, that message comprises, for each frequency subband of each first group of the plural first groups, information representative of the channel quality indication.

At next step S403, the processor 200 detects the reception, through the channel interface 205 of an information sent by the second telecommunication device 20 to which the signal transferred at step S401 has been sent. That information is representative of the channel quality indications on the at least one frequency subband of the second group.

The signals are under the form of a message or under the form of pilot signals which are weighted by information representative of a channel quality indication.

In a variant, that message comprises, for each frequency subband of each second group of the plural second groups, information representative of the channel quality indications.

It has to be noted here that the information received at step S402 and S403 are comprised in a single message or in two messages.

As example, the second telecommunication device 20 reports the channel indications as disclosed in the Fig. 5a.

The **Fig**. **5a** is a diagram representing an example of a message transferred by a second telecommunication device to a first telecommunication device according to the present invention.

The message comprises at least three fields. The first field noted CQI SB1 comprises the information representative of the channel quality indication of the frequency subband SB1. The second field noted CQI SB2 comprises the information representative of the channel quality indication of the frequency subband SB2. The Third filed noted average SB4 SB5 comprises the information representative of the channel quality indications of the frequency subbands SB4 and SB5. The message comprises also an optional fourth field noted ID which comprises the identifier of the second telecommunication device 20

In that example of the Fig. 5a, the first group of at least one frequency subband comprises two frequency subbands noted SB1 and SB2 and the second group of at least one frequency subband comprises two frequency subbands noted SB4 and SB5.

The first telecommunication device 10 receives the information representative of the channel quality indication of the frequency subband SB1, the information representative of the channel quality indication of the frequency subband SB2 and receives information representative of the channel quality indications in the frequency subbands SB4 and SB5.

At next step S404, the processor 200 checks if the information representative of the channel quality indications on the at least one frequency subband of the second group is upper than a given information.

The given information is a predetermined value or an information determined from each channel quality indication received at step S402.

That information determined from each channel quality indication is the average of the received SINRs or the inverse of the average of Interference plus Noise components received by the second telecommunication device 20, or an information which indicates if the averaged SINRs or the inverse of the averaged Interference plus Noise components is upper or lower than a predetermined value or is comprised within two predetermined values or is the modulation and coding scheme which are suited for the measured SINRs or the measured Interference plus Noise components.

As example, if the information representative of the channel quality indications in the frequency subbands SB4 and SB5 is determined from the curve noted Noa in the Fig. 6a and if the information representative of the channel quality indications in the frequency subbands SB4 and SB5 is upper than the given information, as example the average of the channel quality indications in the frequency subbands SB1 and SB2 determined from the curve Noa, the processor 200 moves to step S405.

In the Fig. 6a, the curve noted Noa represents the Interference plus Noise levels in the frequency subbands SB1 to SBL of the wireless telecommunication network.

Such case occurs when none of the telecommunication devices 10 or 20 located in a neighbour wireless area 15₂ to 15₅ of the wireless area 15₁ managed by the first telecommunication device 10₁ are currently using the frequency subbands SB4 and SB5.

On the contrary, if the information representative of the channel quality indications in the frequency subbands SB4 and SB5 is determined from the curve Nob in the Fig. 6b and if the information representative of the channel quality indications in the frequency subbands SB4 and SB5 is lower than the given information, as example the average of the channel quality indications in the frequency subbands SB1 and SB2 determined from the curve Nob, the processor 200 moves to step S407.

In the Fig. 6b, the curve noted Nob represents the Interference plus noise levels in the frequency subbands SB1 to SBL of the wireless telecommunication network.

Such case occurs when at least one of the telecommunication devices 10 or 20 which are located in a neighbour wireless area 15₂ to 15₅ area of the wireless area 15₁ managed by the first telecommunication device 10₁ is currently using the frequency subbands SB4 and SB5.

At step S405, the processor 200 selects at least another first group of at least one frequency subband. The other first group of frequency subbands is, as example, the second group of at least a frequency subband which has been previously indicated at step S401 of the present algorithm or a group randomly selected among the plural groups.

After that, the processor 200 moves to step S406. At that step, the processor 200 commands the transfer of a message to the second telecommunication device 20. The message comprises the identifier of the group or the identifiers of the groups that each second telecommunication device 20 has to use when it receives signals representative of a group of data from the first telecommunication device 10 through the downlink channel and/or the group or groups of frequency subbands that each second telecommunication device 20 has to use when it transfers signals representative of a group of data to the first telecommunication device 10 through the uplink channel.

That group or groups are preferably the one or ones selected at step S405.

After that, the processor 200 moves to step S407.

At step S407, the processor 200 selects another second group of at least one frequency subband. The other second group is, as example, selected randomly among plural possible groups of at least one frequency subband.

The processor 200 returns then to step S400 and executes the step S400 to S407 for the other first and second groups of at least one frequency subbands.

Thanks to that, the processor 200 can get, on a long term basis, information representative of the channel quality indications in the frequency subbands of the wireless telecommunication network and or information representative of channel quality indication for each frequency subband used by the wireless telecommunication network.

As far as the information representative of the channel quality indications represent an average of plural channel quality indications, the multi-path fading effect is less sensible on that information than on the information representative of the channel quality indication.

Furthermore, the telecommunication devices 10 and/or 20 transmit or receive signals representative of groups of data in the frequency subbands which have a good channel quality indication.

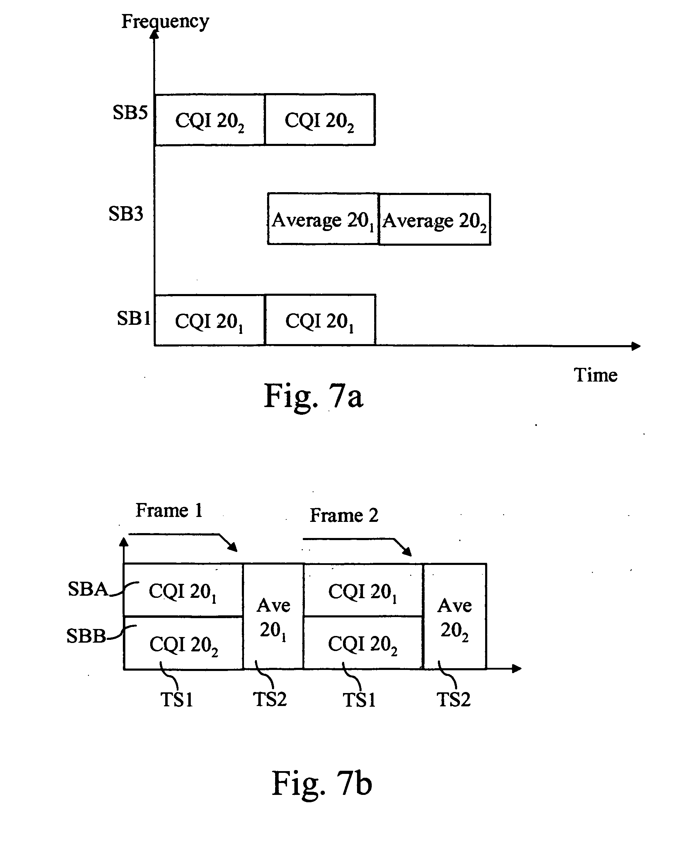

**Fig. 7a** is a diagram representing another example of a message transferred by a first telecommunication device to a second telecommunication device comprising information identifying the first and the second groups of at least one frequency subband.

In the example of the Fig. 7a, the first group of at least one frequency subband which is indicated to the second telecommunication device 20₁ comprises one frequency subband SB1 and the second group of at least one frequency subband which is indicated to the second telecommunication device 20₁ comprises one frequency subband noted SB3.

The second group of at least one frequency subband which is indicated to the second telecommunication device 20₂ comprises one frequency subband SB5 and the second group of at least one frequency subband which is indicated to the second telecommunication device 20₂ comprises one frequency subband noted SB3.

The first telecommunication device 10 receives from the second telecommunication devices 20₁ and 20₂ the information representative of the channel quality indication of the frequency subbands SB1 and SB5 measured at different moments and receives information representative of the channel quality indications in the frequency subband SB3 at different moments.

The second telecommunication device 20₁ transfers periodically the information representative of the channel quality indication of the frequency subband SB1.

The second telecommunication device 20₂ transfers periodically the information representative of the channel quality indication of the frequency subband SB5.

In the Fig. 7a, the same frequency subband SB3 is used either by the second telecommunication device 20₁ and the second telecommunication device 20₂ for the transfer of their respective information representative of the channel quality indications in the frequency subband SB3. The second telecommunication devices 20₁ and 20₂ use different time slots for that.

The second telecommunication 20₁ transfers periodically the average of the information representative of the channel quality indication measured at two different moments of the frequency subband SB3.

The second telecommunication 20₂ transfers periodically the average of the information representative of the channel quality indication measured at two different moments of the frequency subband SB3.

Fig. 7b is a diagram representing an example of frames transferred by the second telecommunication devices to a first telecommunication device.

In the Fig. 7b, two consecutives frames are shown. The horizontal axis represents the time and the vertical axis represents the frequency bandwidth.

The second telecommunication device 20₁ transfers in the frequency subband noted SBA and in the time slot noted TS1 of the first frame noted frame 1, the information representative of the channel quality indication of each frequency subband of the first group that the first telecommunication 10₁ has indicated.

The second telecommunication device 20₁ transfers in the frequency subbands SBA and SBB and in the time slot noted TS2 of the frame 1, the information representative of the channel quality indications determined by the second telecommunication device for each frequency subband comprised in the second group that first telecommunication 10₁ has indicated.

The second telecommunication device 20₂ transfers in the frequency subband noted SBB and in the time slot noted TS1 of the frame 1, the information representative of the channel quality indication of each frequency subband of the first group that the first telecommunication 10₁ has indicated.

The second telecommunication device 20₁ transfers in the frequency subband noted SBA and in the time slot noted TS1 of the next frame noted frame 2, the information representative of the channel quality indication of each frequency subband of the first group that the first telecommunication 10₁ has indicated.

The second telecommunication device 20₂ transfers in the frequency subband noted SBB and in the time slot noted TS1 of the frame 2, the information representative of the channel quality indication of each frequency subband of the first group that the first telecommunication 10₁ has indicated.

The second telecommunication device 20₂ transfers in the frequency subbands SBA and SBB and in the time slot noted TS2 of the frame 2, the information representative of the channel quality indications determined by the second telecommunication device for each frequency subband comprised in the second group that first telecommunication 10₁ has indicated.

The second telecommunication devices 20 use alternatively the time slot TS2 of the frame.

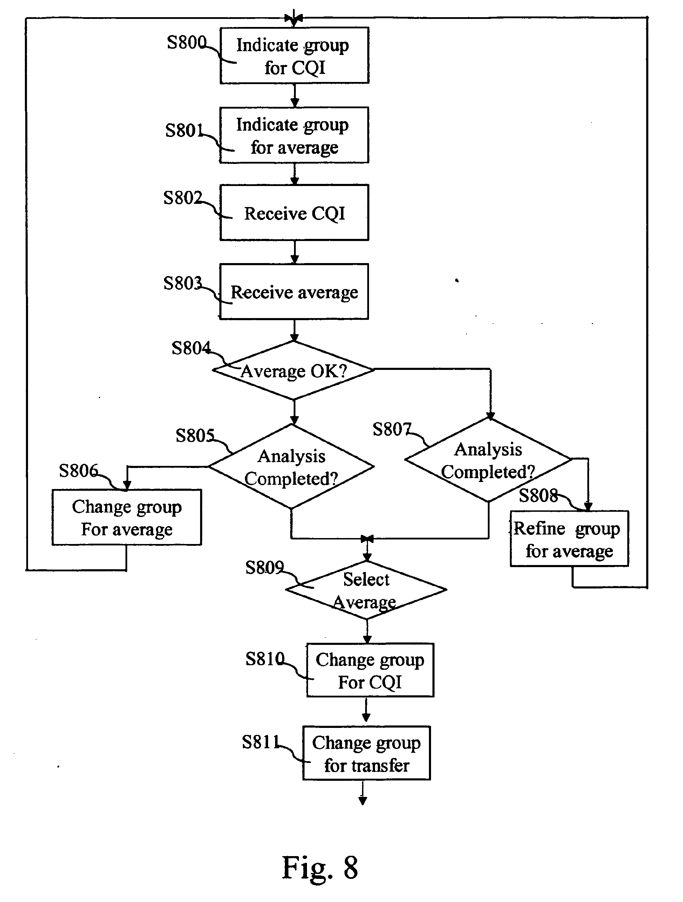

**Fig. 8** is a diagram representing an algorithm executed by the first telecommunication device according to a second mode of realisation of the present invention.

At step S800, the processor 200 of, as example the first telecommunication device 10, commands the transfer through the channel interface 205 of at least an information identifying a first group of at least one frequency subband to a second telecommunication device 20.

The information identifying a first group of at least one frequency subband is as the one disclosed at step S400 of the Fig. 4.

At next step S801, the processor 200 commands the transfer through the channel interface 205 of at least an information identifying a second group of at least one frequency subband to the second telecommunication device 20.

It has to be noted here that, the processor 200 commands, in a variant, the transfer through the channel interface 205 of plural information identifying respectively a second group of at least one frequency subband.

The information identifying a second group of at least one frequency subband is as the one disclosed at step S401 of the Fig. 4.

It has to be noted here that the information identifying the first group and the at least one second group are transferred in one message, as it is shown in the Fig. 5b, or in two messages.

At next step S802, the processor 200 detects the reception, through the channel interface 205 of at least one signal sent by the second telecommunication device 20 to which the information transferred at step S800 has been sent. That signal or signals comprises or comprise, for each subband of the first group, information representative of a channel quality indication for the considered frequency subband.

The signals are under the form of a message or under the form of pilot signals which are weighted by information representative of a channel quality indication.

The information representative of a channel quality indication is as the one disclosed at step S402 of the Fig. 4.

At next step S803, the processor 200 detects the reception, through the channel interface 205 of a message sent by the second telecommunication device 20 to which the information transferred at step S801 has been sent. That information is representative of the channel quality indications on the at least one frequency subband of the second group.

In a variant, an information representative of the channel quality indications is received for each second group specified in at step S801.

The first group of at least one frequency subband is as example the group noted Gr1 in the Fig. 9 and second group of at least one frequency subband is as example the group noted Gr11 in the Fig. 9.

**Fig. 9** is a diagram representing an example of different groups of frequency subbands used in the second mode of realisation of the present invention.

In the Fig. 9, seven groups of frequency subbands noted Gr1, Gr10, Gr11, Gr20, Gr21, Gr30 and Gr31.

The group Gr1 comprises the frequency subbands, SB1 and SB2. The group Gr10 comprises the frequency subbands SB3 to SB8. The group Gr11 comprises the frequency subbands SB9 to SBL. The group Gr20 comprises the frequency subbands SB3 to SB6. The group Gr21 comprises the frequency subbands SB7 and SB8. The group Gr30 comprises the frequency subbands SB3 and SB4. The group Gr31 comprises the frequency subbands SB5 and SB6.

At next step S804, the processor 200 checks if the information representative of the channel quality indications on the at least one frequency subband of the second group is upper than the given information.

The given information is as the one described at step S404 of the Fig. 4.

It has to be noted here that, if plural second groups have been in at step S801, the processor 200 executes the step S804 for each receive information representative of the channel quality indications.

If the information representative of the channel quality indications on the frequency subbands of the second group is upper than the given information, the processor moves to step S807.

If the information representative of the channel quality indications on the frequency subbands of the second group is lower than the given information, the processor moves to step S805.

As example, the information representative of the channel quality indications on the frequency subbands of the second group Gr11 is lower than the given information, the processor 200 moves to step S805.

At step S805, the processor 200 checks if the analysis of the frequency subbands is completed. If the processor 200 has received information representative of the channel quality indications on the frequency subbands of the each group which comprises at least the same number of frequency subbands as the second group of at least a frequency subbands under process, the processor 200 moves to step S809. Otherwise, the processor 200 moves to step S806.

At step S805, the processor 200 selects another second group of at least one frequency subband, as example, the group Gr10. The processor 200 returns then to step S800 already described.

The processor 200 executes the steps S800 to S804 as already disclosed.

As example, if at step S804, the information representative of the channel quality indications on the frequency subbands of the second group Gr10 is upper than the given information, the processor 200 moves to step S807.

At step S807, the processor 200 checks if the analysis of the frequency subbands is completed. If the processor 200 has received an information representative of the channel quality indications on the frequency subbands of the each group which comprises at most the same number of frequency subbands as the second group under process, the processor 200 moves to step S809. Otherwise, the processor 200 moves to step S808.

At step S808, the processor 200 refines the content of the second group Gr10 and selects a subset of frequency subbands of the second group of at least one frequency subband Gr10, as example, the group Gr21.

The group Gr 21 is comprised in the group Gr10, i.e. it comprises a part of the frequency subbands comprised in the group Gr10.

The processor 200 executes the steps S800 to S804 as already disclosed.

As example, if at step S804, the information representative of the channel quality indications on the frequency subbands of the second group Gr21 is lower than the given information, the processor 200 moves to step S805 and S806, and selects another the second group, i.e. the group Gr20.

The processor 200 executes the steps S800 to S804 as already disclosed.

As example, if at step S804, the information representative of the channel quality indications on the frequency subbands of the second group Gr20 is upper than the given information, the processor 200 moves to step S807 and S808 and selects another subset of frequency subbands of the second group of at least one frequency subband Gr20, as example, the group Gr31.

The processor 200 executes the steps S800 to S804 as already disclosed.

As example, if at step S804, the information representative of the channel quality indications on the frequency subbands of the second group GR31 is upper than the given information, the processor 200 moves to step S807 and, as the analysis of the frequency subbands is completed, the processor 200 moves to step S809.

At step S809, the processor 200 determined among the second groups for which the information representative of the channel quality indications on the frequency subbands of the second groups is upper than the given information, at least one second group.

At next step S810, the processor 200 selects another first group of at least one frequency subband. The other first group of frequency subbands is the at least one determined second at step S809.

At next step S811, the processor 200 commands the transfer of a message to the second telecommunication device 20. The message comprises the identifier of the group or the identifiers of the groups that each second telecommunication device 20 has to use when it receives signals representative of a group of data from the first telecommunication device 10 through the downlink channel and/or the group or groups of frequency subbands that each second telecommunication device 20 has to use when it transfers signals representative of a group of data to the first telecommunication device 10 through the uplink channel.

That group of data is as example the one determined at step S810.

After that, the processor 200 returns to step S800 in order to execute the present algorithm for the same or another second telecommunication device 20.

**Fig. 10** is a diagram representing an algorithm executed by each second telecommunication device according to the first and second modes of realisation of the present invention.

At step S100, the processor 300 of, as example the second telecommunication device 20₂, receives through the channel interface 305 a message comprising an information identifying a first group of at least one frequency subband from the first telecommunication device 10₁.

The received information is as the one transferred at the step S400 of the Fig. 4 or S800 of the Fig. 8.

At next step S101, the processor 300 receives through the channel interface 305 an information identifying a second group of at least one frequency subband from the first telecommunication device 10₁.

The received information is as the one transferred at the step S401 of the Fig. 4 or S801 of the Fig. 8.

It has to be noted here that the information received at step S100 and S101 are comprised in a single message or in two messages.

At next step S102, the processor 300 receives from the CQI measurement module 310 of the channel interface 305, the channel quality indication measured for the at least one frequency subband comprised in the first group of at least one frequency subband identified at step S100.

At next step S103, the processor 300 receives from the averaging module 340 of the channel interface 305, the information representative the channel quality indications determined for the at least one frequency subband comprised in the second group of at least one frequency subband identified at step S101.

At next step S104, the processor 300 commands the transfer, through the channel interface 305 of at least one signal comprising, for each subband of the first group, an information representative of the channel quality indication.

The signal or signals are under the form of a message or under the form of pilot signals which are weighted by information representative of a channel quality indication.

At next step S105, the processor 300 commands the transfer, through the channel interface 305 of an information representative of the channel quality indications on the at least one frequency subband of the second group.

The information representative of the channel quality indications are under the form of a message or under the form of pilot signals which are weighted by information representative of a channel quality indication.

It has to be noted here that the transferred information messages at step S104 and S105 are comprised in a single message or in two messages.

At next step S106, the processor 300 detects the reception of a message transferred by the first telecommunication device 10 which comprises the identifier of the group or the identifiers of the groups that the second telecommunication device 20 has to use when it receives signals representative of a group of data from the first telecommunication device 10 through the downlink channel and/or the group or groups of frequency subbands that each second telecommunication device 20 has to use when it transfers signals representative of a group of data to the first telecommunication device 10 through the uplink channel.

The processor 300 returns then to step S100 and waits for the reception of a new message.

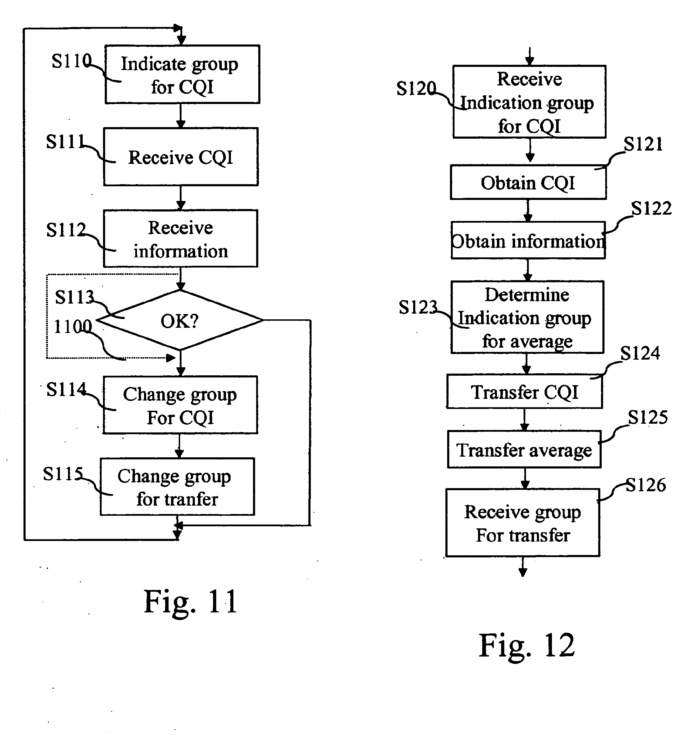

**Fig. 11** is a diagram representing an algorithm executed by the first telecommunication device according to a third mode of realisation of the present invention.

At step S110, the processor 200 of, as example the first telecommunication device 10₁, commands the transfer through the channel interface 205 of an information identifying a first group of at least one frequency subband among plural groups, to a second telecommunication device 20 as it has been already disclosed at step S400.

At next step S111, the processor 200 detects the reception, through the channel interface 205 of signals sent by the second telecommunication device 20 to which the information transferred at step S110 has been sent. That signals comprises, for each frequency subband of the first group, information representative of a channel quality indication.

The information representative of the channel quality indication are under the form of a message or under the form of pilot signals which are weighted by information representative of a channel quality indication.

In a variant, that message comprises, for each frequency subband of each first group, information representative of the channel quality indication.

At next step S112, the processor 200 detects the reception, through the channel interface 205 of signals comprising the identifier or identifiers of the group or groups of frequency subbands which have the highest channel quality indications among the groups of frequency subbands of the wireless telecommunication network. That signals comprises also in combination with each identifier, an information representative of the channel quality indications on the at least one frequency subband of that group.

At next step S113, the processor 200 checks if the information representative of the channel quality indications on the at least one frequency subband of the second group is upper than a given information.

The given information is a predetermined value or an information determined from each channel quality indication received at step S111 as already disclosed at step S404 of the Fig. 4.

If at least one information representative of the channel quality indications on the at least one frequency subband of the second group is upper than a given information, the processor 200 moves to step S114. Otherwise, the processor 200 returns to step S111.

It has to be noted here that in a variant as it is shown by the arrow noted 1100, the signals received at step S112 comprise only the identifier of the group of frequency subbands which have the highest channel quality indications among the groups of frequency subbands of the wireless telecommunication network.

According to that variant, the processor 200 moves directly from step S112 to step S114.

At step S114, the processor 200 selects at least another first group of at least one frequency subband. The other first group of frequency subbands is the group of at least a frequency subband which has the highest channel quality indications among the groups of frequency subbands.

After that, the processor 200 moves to step S115. At that step, the processor 200 commands the transfer of a message to the second telecommunication device 20. The message comprises the identifier of the group or the identifiers of the groups that each second telecommunication device 20 has to use when it receives signals representative of a group of data from the first telecommunication device 10 through the downlink channel and/or the group or groups of frequency subbands that the second telecommunication device 20 has to use when it transfers signals representative of a group of data to the first telecommunication device 10 through the uplink channel.

After that, the processor 200 returns then to step S110 and executes the step S110 to S115 for the other first group of at least one frequency subbands.

**Fig. 12** is a diagram representing an algorithm executed by each second telecommunication device according to the third mode of realisation of the present invention.

At step S120, the processor 300 of, as example the second telecommunication device 20₂, receives through the channel interface 305 a message comprising an information identifying a first group of at least one frequency subband from the first telecommunication device 10₁.

The received information is as the one transferred at the step S110 of the Fig. 11.

At next step S121, the processor 300 receives from the CQI measurement module 310 of the channel interface 305, the channel quality indication measured for the at least one frequency subband comprised in the first group of at least one frequency subband identified at step S120.

At next step S122, the processor 300 receives from the averaging module 340 of the channel interface 305, the information representative of the channel quality indications determined for each of the groups of the wireless telecommunication network.

At next step S123, the processor 300 determines the identifier or identifiers of the group or groups of frequency subbands which have the highest channel quality indications among the groups of frequency subbands of the wireless telecommunication network.

At next step S124, the processor 300 commands the transfer, through the channel interface 305 of a message as the one disclosed at step S111 of the Fig. 11.

At next step S125, the processor 300 commands the transfer, through the channel interface 305 of a message as the one disclosed at step S112 of the Fig. 11.

At next step S126, the processor 300 detects the reception of a message as the one received at step S106 of the Fig. 10

The processor 300 returns then to step S120 and waits for the reception of a new message.

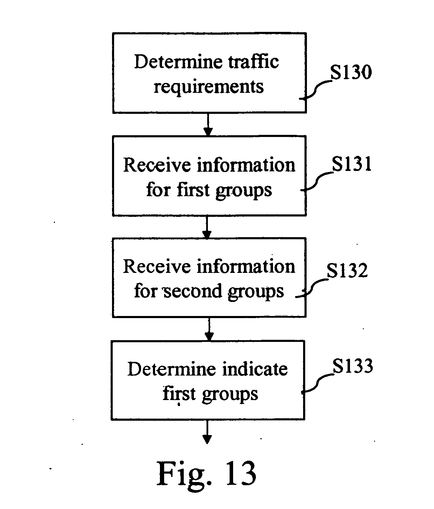

**Fig. 13** is a diagram representing an algorithm executed by each first telecommunication device in order to determine at least a first group for each second telecommunication device considering the information transferred by other second telecommunication devices according to a fourth mode of realisation of the present invention.

The present algorithm is executed by each first telecommunication device 10 in addition to the comparison of the information representative of the channel quality indications with the given information executed at steps S404, S804 and S113 of the algorithms described in the respective Figs. 4, 8 and 11.

At step S130, the processor 200, of as example the first telecommunication device 10₁, obtains from each second telecommunication device 20 which is located in the cell 15₁ it manages their requirements in term of traffic, i.e. the data rate and/or the Quality of Service required. According to their requirements, one or several first groups of at least one frequency subband may be required.

At next step S131, the processor 200 receives, from each second telecommunication device 20 which is located in the cell 15₁ it manages, information representative of the channel condition indication on each subband of the first group which has been indicated to that second telecommunication 20.

It has to be noted here that, different first groups can be indicated to different second telecommunication devices 20.

At next step S132, the processor 200 receives, from each second telecommunication device 20 which is located in the cell 15₁ it manages, an information representative of the channel condition indications on each subband of the second group which has been indicated to that second telecommunication device 20.

It has to be noted here that, different second groups can be indicated to different second telecommunication devices 20.

At next step S133, the processor 200 determines at least a first group for each second telecommunication device 20 which is located in the cell 15₁ it manages considering the information transferred by other second telecommunication devices 20 which are located in the cell 15₁ it manages.

For that, the processor 200 uses the knowledge of the requirements obtained at step S130 and the information received at step S131 and S132 of the present algorithm.

As example and in a non limitative way, if more frequency subbands need to be allocated to a second telecommunication device 20₁ in order to cope with its requirement in term of traffic, the processor 200 uses the information transferred by the other second telecommunication devices 20₂ in order to find another group which has good channel quality indication and allocates it to that second telecommunication device 20₂.

In another example, let consider the case where a first group is indicated to a second telecommunication device 20, another first group is indicated to another second telecommunication device 20 and the same second group is indicated to the second telecommunication devices 20. The second telecommunication device 20 transfers information representative of poor channel quality condition and conditions on frequency subbands of the first and second groups, the other second telecommunication device 20 transfers information representative of good channel quality condition and conditions on frequency subbands of the first and second groups, the processor 200 indicates to the second telecommunication device 20 the first group which was previously indicated to the other second telecommunication device 20 and indicates to the other second telecommunication device 20 the second group which was previously indicated to the other second telecommunication device 20.

As it can be understood from the reading of this description, when each first telecommunication device 10 uses the same division of the L frequency subbands into groups of frequency subbands, the variance of interference between frequency subbands is enhanced and it is more likely that the second telecommunication devices 20 find a frequency subband of smaller interference among plural subbands.

It has to be noted here that, each first telecommunication device 10 executes the present algorithm asynchronously, i.e. not simultaneously.

## Claims

1. Method for transferring to a first telecommunication device (10) information representative of the channel quality indication determined by a second telecommunication device (20) on frequency subbands, the telecommunication devices being linked through a wireless telecommunication network, the wireless telecommunication network using a plurality of frequency subbands (15), **characterized in that** the method comprises the steps executed by the second telecommunication device of:
- determining a first channel quality indication on a subband comprised in a first frequency range, .
- determining a second channel quality indication on at least two subbands, the at least two subbands being comprised in a second frequency range larger than the first frequency range,
- transferring the first channel quality indication to the first telecommunication device in a first time period,
- transferring the second channel quality indication to the first telecommunication device in a second time period different from the first time period.

2. Device for transferring to a first telecommunication device (10) information representative of the channel quality indication determined by a second telecommunication device (20) on frequency subbands, the telecommunication devices being linked through a wireless telecommunication network, the wireless telecommunication network using a plurality of frequency subbands (15), **characterized in that** the device for transferring information is included in the second telecommunication device and comprises:
- a first unit configured to determine a first channel quality indication on a subband comprised in a first frequency range,
- a second unit configured to determine a second channel quality indication on at least two subbands, the at least two subbands being comprised in a second frequency range larger than the first frequency range,
- a third unit configured to transfer the first channel quality indication to the first telecommunication device in a first time period,
- a fourth unit configured to transfer the second channel quality indication to the first telecommunication device in a second time period different from the first time period.

3. Method for transferring to a first telecommunication device (10) information representative of the channel quality indication determined by a second telecommunication device (20) on frequency subbands, the telecommunication devices being linked through a wireless telecommunication network, the wireless telecommunication network using a plurality of frequency subbands (15), **characterized in that** the method comprises the steps of:
- determining, by the second telecommunication device, a first channel quality indication on a subband comprised in a first frequency range,
- determining, by the second telecommunication device, a second channel quality indication on at least two subbands, the at least two subbands being comprised in a second frequency range larger than the first frequency range,
- transferring, by the second telecommunication device, the first channel quality indication to the first telecommunication device in a first time period,
- receiving, by the first telecommunication device, the first channel quality indication in the first time period,
- transferring, by the second telecommunication device, the second channel quality indication to the first telecommunication device in a second time period different from the first time period,
- receiving, by the first telecommunication device, the second channel quality indication in the second time period.

4. Method according to claim 3, **characterised in that** the method further comprises the step of determining, by the first telecommunication device, the frequency subbands that the second telecommunication device has to use when it receives signals representative of a group of data from the first telecommunication device and/or the frequency subbands that the second telecommunication device has to use when it transfers signals representative of a group of data to the first telecommunication device.

5. System for transferring to a first telecommunication device (10) information representative of the channel quality indication determined by a second telecommunication device (20) on frequency subbands, the telecommunication devices being linked through a wireless telecommunication network, the wireless telecommunication network using a plurality of frequency subbands (15) the system comprising the first and second telecommunication devices, **characterized in that** the system for transferring information comprises:
- a first unit, included in the second telecommunication device, configured to determine, a first channel quality indication on a subband comprised in a first frequency range,
- a second unit, included in the second telecommunication device, configured to determine a second channel quality indication on at least two subbands, the at least two subbands being comprised in a second frequency range larger than the first frequency range,
- a third unit, included in the second telecommunication device, configured to transfer the first channel quality indication to the first telecommunication device in a first time period,
- a fourth unit, included in the first telecommunication device, configured to receive the first channel quality indication in the first time period,
- a fifth unit, included in the second telecommunication device, configured to transfer the second channel quality indication to the first telecommunication device in a second time period different from the first time period,
- a sixth unit, included in the first telecommunication device, configured to receive the second channel quality indication in the second time period.

6. System according to claim 5, **characterised in that** the system for transferring information comprises a seventh unit, included in the first telecommunication device, configured to determine the frequency subbands that the second telecommunication device has to use when it receives signals representative of a group of data from the first telecommunication device and/or the frequency subbands that the second telecommunication device has to use when it transfers signals representative of a group of data to the first telecommunication device.

## Patentansprüche

1. Verfahren zum Transferieren von Information, die die durch eine zweite Telekommunikationsvorrichtung (20) bestimmte Kanalqualitätsanzeige darstellt, auf Frequenzunterbändern zu einer ersten Telekommunikationsvorrichtung (10), wobei die Telekommunikationsvorrichtungen durch ein drahtloses Telekommunikationsnetzwerk verbunden sind, wobei das drahtlose Telekommunikationsnetzwerk eine Vielzahl von Frequenzunterbändern (15) verwendet, **dadurch gekennzeichnet, dass** das Verfahren die folgenden durch die zweite Telekommunikationsvorrichtung ausgeführten Schritte aufweist:
- Bestimmen einer ersten Kanalqualitätsanzeige auf einem in einem ersten Frequenzbereich umfassten Unterband,
- Bestimmen einer zweiten Kanalqualitätsanzeige auf wenigstens zwei Unterbändern, wobei die wenigstens zwei Unterbänder in einem zweiten Frequenzbereich umfasst sind, der größer als der erste Frequenzbereich ist,
- Transferieren der ersten Kanalqualitätsanzeige in einer ersten Zeitperiode zur ersten Telekommunikationsvorrichtung,
- Transferieren der zweiten Kanalqualitätsanzeige in einer zweiten Zeitperiode, die unterschiedlich von der ersten Zeitperiode ist, zur ersten Telekommunikationsvorrichtung.

2. Vorrichtung zum Transferieren von Information, die die durch eine zweite Telekommunikationsvorrichtung (20) bestimmte Kanalqualitätsanzeige darstellt, auf Frequenzunterbändern zu einer ersten Telekommunikationsvorrichtung (10), wobei die Telekommunikationsvorrichtungen durch ein drahtloses Telekommunikationsnetzwerk verbunden sind, wobei das drahtlose Telekommunikationsnetzwerk eine Vielzahl von Frequenzunterbändern (15) verwendet, **dadurch gekennzeichnet, dass** die Vorrichtung zum Transferieren von Information in der zweiten Telekommunikationsvorrichtung enthalten ist und folgendes aufweist:
- eine erste Einheit, die konfiguriert ist, um eine erste Kanalqualitätsanzeige auf einem in einem ersten Frequenzbereich umfassten Unterband zu bestimmen,
- eine zweite Einheit, die konfiguriert ist, um eine zweite Kanalqualitätsanzeige auf wenigstens zwei Unterbändern zu bestimmen, wobei die wenigstens zwei Unterbänder in einem zweiten Frequenzbereich umfasst sind, der größer als der erste Frequenzbereich ist,
- eine dritte Einheit, die konfiguriert ist, um die erste Kanalqualitätsanzeige in einer ersten Zeitperiode zur ersten Telekommunikationsvorrichtung zu transferieren,
- eine vierte Einheit, die konfiguriert ist, um die zweite Kanalqualitätsanzeige in einer zweiten Zeitperiode, die unterschiedlich von der ersten Zeitperiode ist, zur ersten Telekommunikationsvorrichtung zu transferieren.

3. Verfahren zum Transferieren von Information, die die durch eine zweite Telekommunikationsvorrichtung (20) bestimmte Kanalqualitätsanzeige darstellt, auf Frequenzunterbändern zu einer ersten Telekommunikationsvorrichtung (10), wobei die Telekommunikationsvorrichtungen durch ein drahtloses Telekommunikationsnetzwerk verbunden sind, wobei das drahtlose Telekommunikationsnetzwerk eine Vielzahl von Frequenzunterbändern (15) verwendet, **dadurch gekennzeichnet, dass** das Verfahren die folgenden Schritte aufweist:
- Bestimmen einer ersten Kanalqualitätsanzeige auf einem in einem ersten Frequenzbereich umfassten Unterband durch die zweite Telekommunikationsvorrichtung,
- Bestimmen einer zweiten Kanalqualitätsanzeige auf wenigstens zwei Unterbändern durch die zweite Telekommunikationsvorrichtung, wobei die wenigstens zwei Unterbänder in einem zweiten Frequenzbereich umfasst sind, der größer als der erste Frequenzbereich ist,
- Transferieren der ersten Kanalqualitätsanzeige in einer ersten Zeitperiode durch die zweite Telekommunikationsvorrichtung zur ersten Telekommunikationsvorrichtung,
- Empfangen der ersten Kanalqualitätsanzeige in der ersten Zeitperiode durch die erste Telekommunikationsvorrichtung,
- Transferieren der zweiten Kanalqualitätsanzeige in einer zweiten Zeitperiode, die unterschiedlich von der ersten Zeitperiode ist, durch die zweite Telekommunikationsvorrichtung zur ersten Telekommunikationsvorrichtung,
- Empfangen der zweiten Kanalqualitätsanzeige in der zweiten Zeitperiode durch die erste Telekommunikationsvorrichtung.

4. Verfahren nach Anspruch 3, **dadurch gekennzeichnet, dass** das Verfahren weiterhin den Schritt zum Bestimmen der Frequenzunterbänder, die die zweite Telekommunikationsvorrichtung zu verwenden hat, wenn sie Signale, die eine Gruppe von Daten darstellen, von der ersten Telekommunikationsvorrichtung empfängt, und/oder der Frequenzunterbänder, die die zweite Telekommunikationsvorrichtung zu verwenden hat, wenn sie Signale, die eine Gruppe von Daten darstellen, zur ersten Telekommunikationsvorrichtung transferiert, durch die erste Telekommunikationsvorrichtung aufweist.

5. System zum Transferieren von Information, die die durch eine zweite Telekommunikationsvorrichtung (20) bestimmte Kanalqualitätsanzeige darstellt, auf Frequenzunterbändern zu einer ersten Telekommunikationsvorrichtung (10), wobei die Telekommunikationsvorrichtungen durch ein drahtloses Telekommunikationsnetzwerk verbunden sind, wobei das drahtlose Telekommunikationsnetzwerk eine Vielzahl von Frequenzunterbändern (15) verwendet, **dadurch gekennzeichnet, dass** das System zum Transferieren von Information folgendes aufweist:
- eine in der zweiten Telekommunikationsvorrichtung enthaltene erste Einheit, die konfiguriert ist, um eine erste Kanalqualitätsanzeige auf einem in einem ersten Frequenzbereich umfassten Unterband zu bestimmen,
- eine in der zweiten Telekommunikationsvorrichtung enthaltene zweite Einheit, die konfiguriert ist, um eine zweite Kanalqualitätsanzeige auf wenigstens zwei Unterbändern zu bestimmen, wobei die wenigstens zwei Unterbänder in einem zweiten Frequenzbereich umfasst sind, der größer als der erste Frequenzbereich ist,
- eine in der zweiten Telekommunikationsvorrichtung enthaltene dritte Einheit, die konfiguriert ist, um die erste Kanalqualitätsanzeige in einer ersten Zeitperiode zur ersten Telekommunikationsvorrichtung zu transferieren,
- eine in der ersten Telekommunikationsvorrichtung enthaltene vierte Einheit, die konfiguriert ist, um die erste Kanalqualitätsanzeige in der ersten Zeitperiode zu empfangen,
- eine in der zweiten Telekommunikationsvorrichtung enthaltene fünfte Einheit, die konfiguriert ist, um die zweite Kanalqualitätsanzeige in einer zweiten Zeitperiode, die unterschiedlich von der ersten Zeitperiode ist, zur ersten Telekommunikationsvorrichtung zu transferieren,
- eine in der ersten Telekommunikationsvorrichtung enthaltene sechste Einheit, die konfiguriert ist, um die zweite Kanalqualitätsanzeige in der zweiten Zeitperiode zu empfangen.

6. System nach Anspruch 5, **dadurch gekennzeichnet, dass** das System zum Transferieren von Information eine in der ersten Telekommunikationsvorrichtung enthaltene siebte Einheit aufweist, die konfiguriert ist, um die Frequenzunterbänder, die die zweite Telekommunikationsvorrichtung zu verwenden hat, wenn sie Signale, die eine Gruppe von Daten darstellen, von der ersten Telekommunikationsvorrichtung empfängt, und/oder die Frequenzunterbänder, die die zweite Telekommunikationsvorrichtung zu verwenden hat, wenn sie Signale, die eine Gruppe von Daten darstellen, zur ersten Telekommunikationsvorrichtung transferiert, zu bestimmen.

## Revendications

1. Procédé pour transférer à un premier dispositif de télécommunication (10) des informations représentatives de l'indication de qualité de canal déterminées par un second dispositif de télécommunication (20) sur des sous-bandes de fréquence, les dispositifs de télécommunication étant reliés par un réseau de télécommunication sans fil, le réseau de télécommunication sans fil utilisant une pluralité de sous-bandes de fréquence (15), **caractérisé en ce que** le procédé comporte les étapes exécutées par le second dispositif de télécommunication de:
- détermination d'une indication de qualité de canal sur une première sous-bande comprise dans une première plage de fréquences,
- détermination d'une seconde indication de qualité de canal sur au moins deux sous-bandes, les au moins deux sous-bandes étant comprises dans une seconde plage de fréquence supérieure à la première plage de fréquence,
- transfert de la première indication de qualité de canal au premier dispositif de télécommunication dans un premier intervalle de temps,
- transfert de la deuxième indication de qualité de canal au premier dispositif de télécommunication dans un second intervalle de temps différent du premier intervalle de temps.

2. Dispositif pour transférer à un premier dispositif de télécommunication (10) des informations représentatives de l'indication de qualité de canal déterminées par un second dispositif de télécommunication (20) sur des sous-bandes de fréquence, les dispositifs de télécommunication étant reliés par un réseau de télécommunication sans fil, le réseau de télécommunication sans fil utilisant une pluralité de sous-bandes de fréquence (15), **caractérisé en ce que** le dispositif pour transférer des informations est inclus dans le second dispositif de télécommunication et comporte:
- une première unité configurée pour déterminer une indication de qualité de canal sur une première sous-bande comprise dans une première plage de fréquence,
- une seconde unité configurée pour déterminer une seconde indication de qualité de canal sur au moins deux sous-bandes, les au moins deux sous-bandes étant comprises dans une seconde plage de fréquence supérieure à la première plage de fréquence,
- une troisième unité configurée pour transférer la première indication de qualité de canal au premier dispositif de télécommunication dans un premier intervalle de temps,
- une quatrième unité configurée pour transférer la deuxième indication de qualité de canal au premier dispositif de télécommunication dans un second intervalle de temps différent du premier intervalle de temps.

3. Procédé pour transférer à un premier dispositif de télécommunication (10) des informations représentatives de l'indication de qualité de canal déterminées par un second dispositif de télécommunication (20) sur des sous-bandes de fréquence, les dispositifs de télécommunication étant reliés par un réseau de télécommunication sans fil, le réseau de télécommunication sans fil utilisant une pluralité de sous-bandes de fréquence (15), **caractérisé en ce que** le procédé comporte les étapes de:
- détermination, par le second dispositif de télécommunication, d'une indication de qualité de canal sur une première sous-bande comprise dans une première plage de fréquence,
- détermination, par le second dispositif de télécommunication, d'une seconde indication de qualité de canal sur au moins deux sous-bandes, les au moins deux sous-bandes étant comprises dans une seconde plage de fréquence supérieure à la première plage de fréquence,
- transfert, par le second dispositif de télécommunication, de la première indication de qualité de canal au premier dispositif de télécommunication dans un premier intervalle de temps,
- réception, par le premier dispositif de télécommunication, de la première indication de qualité de canal dans le premier intervalle de temps,
- transfert, par le second dispositif de télécommunication, de la deuxième indication de qualité de canal au premier dispositif de télécommunication dans un second intervalle de temps différent du premier intervalle de temps.
- réception, par le premier dispositif de télécommunication, de la seconde indication de qualité de canal dans le second intervalle de temps.

4. Procédé selon la revendication 3, **caractérisé en ce que** le procédé comporte en outre l'étape de détermination, par le premier dispositif de télécommunication, des sous-bandes de fréquence que le second dispositif de télécommunication doit utiliser quand il reçoit des signaux représentatifs d'un groupe de données du premier dispositif de télécommunication et/ou des sous-bandes de fréquence que le second dispositif de télécommunication doit utiliser lorsqu'il transfère des signaux représentatifs d'un groupe de données au premier dispositif de télécommunication.

5. Système pour transférer à un premier dispositif de télécommunication (10) des informations représentatives de l'indication de qualité de canal déterminées par un second dispositif de télécommunication (20) sur des sous-bandes de fréquence, les dispositifs de télécommunication étant reliés par un réseau de télécommunication sans fil, le réseau de télécommunication sans fil utilisant une pluralité de sous-bandes de fréquence (15), le système comprenant le premier et le second dispositifs de télécommunication, **caractérisé en ce que** le système pour transférer des informations comporte:
- une première unité, comprise dans le second dispositif de télécommunication, configurée pour déterminer une indication de qualité de canal sur une première sous-bande comprise dans une première plage de fréquence,
- une seconde unité, comprise dans le second dispositif de télécommunication, configurée pour déterminer une seconde indication de qualité de canal sur au moins deux sous-bandes, les au moins deux sous-bandes étant comprises dans une seconde plage de fréquence supérieure à la première plage de fréquence,
- une troisième unité, comprise dans le second dispositif de télécommunication, configurée pour transférer la première indication de qualité de canal au premier dispositif de télécommunication dans un premier intervalle de temps,
- une quatrième unité, comprise dans le premier dispositif de télécommunication, configurée pour recevoir la première indication de qualité de canal dans le premier intervalle de temps,
- une cinquième unité, comprise dans le second dispositif de télécommunication, configurée pour transférer de la deuxième indication de qualité de canal au premier dispositif de télécommunication dans un second intervalle de temps différent du premier intervalle de temps.
- une sixième unité, comprise dans le premier dispositif de télécommunication, configurée pour recevoir la seconde indication de qualité de canal dans le second intervalle de temps.

6. Système selon la revendication 5, **caractérisé en ce que** le système pour transférer des informations comporte une septième unité, comprise dans le premier dispositif de télécommunication, configurée pour déterminer les sous-bandes de fréquence que le second dispositif de télécommunication doit utiliser quand il reçoit des signaux représentatifs d'un groupe de données du premier dispositif de télécommunication et/ou les sous-bandes de fréquence que le second dispositif de télécommunication doit utiliser lorsqu'il transfère des signaux représentatifs d'un groupe de données au premier dispositif de télécommunication.
